(19) Europäisches Patentamt
European Patent Office
Office européen des brevets

(11) **EP 1 192 451 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **00947817.3**

(22) Anmeldetag: **22.06.2000**

(51) Int Cl.:
*G01N 23/223* (2006.01)   *G01N 23/207* (2006.01)

(86) Internationale Anmeldenummer:
**PCT/DE2000/002052**

(87) Internationale Veröffentlichungsnummer:
**WO 2001/002842 (11.01.2001 Gazette 2001/02)**

(54) **VORRICHTUNG ZUR RÖNTGENFLUORESZENZANALYSE**

ANALYSIS DEVICE WHICH USES X-RAY FLUORESCENCE

DISPOSITIF D'ANALYSE PAR FLUORESCENCE X

(84) Benannte Vertragsstaaten:
**AT BE CH CY DE DK ES FI FR GB GR IE IT LI LU MC NL PT SE**

(30) Priorität: **06.07.1999 DE 19932275**

(43) Veröffentlichungstag der Anmeldung:
**03.04.2002 Patentblatt 2002/14**

(73) Patentinhaber: **Fraunhofer-Gesellschaft zur Förderung der angewandten Forschung e.V. 80686 München (DE)**

(72) Erfinder: **HOLZ, Thomas D-01109 Dresden (DE)**

(74) Vertreter: **Pfenning, Meinig & Partner GbR Patent- und Rechtsanwälte An der Frauenkirche 20 01067 Dresden (DE)**

(56) Entgegenhaltungen:
**EP-A- 0 456 897   DE-A- 4 015 275**

- WOBRAUSCHEK P ET AL: "TXRF with synchrotron radiation Analysis of Ni on Si-wafer surfaces" NUCLEAR INSTRUMENTS & METHODS IN PHYSICS RESEARCH, SECTION - A: ACCELERATORS, SPECTROMETERS, DETECTORS AND ASSOCIATED EQUIPMENT, NL,NORTH-HOLLAND PUBLISHING COMPANY. AMSTERDAM, Bd. A363, Nr. 3, 11. September 1995 (1995-09-11), Seiten 619-620, XP004009716 ISSN: 0168-9002

**Beschreibung**

Die Erfindung betrifft eine Vorrichtung zur Röntgenfluoreszenzanalyse nach dem Oberbegriff des Anspruchs 1 sowie ein Verfahren zur Durchführung solcher Analysen und die Verwendung der Vorrichtung. Die Vorrichtung ist insbesondere für die Spurenelementanalyse geeignet und hat insbesondere in der Umweltanalyse sowie in der Dünnschichttechnik (Halbleitertechnik) mögliche Anwendungsgebiete.

Die höchste Nachweisempfindlichkeit erreicht man in der Röntgenfluoreszenzanalyse dadurch, daß Röntgenstrahlung mit einem Einfallswinkel, bei dem Totalreflexion auftritt, auf eine Probe auf einen Probenträger gerichtet wird, dabei muß durch die stofflichen Eigenschaften des Probenträgermaterials bedingt, der Einfallswinkel kleiner als der Grenzwinkel der Totalreflexion $\theta_c$ sein. Der Grenzwinkel $\theta_c$ ergibt sich aus dem Brechungsindex ($n = 1 - \delta + i\beta$; $1 - \delta \rightarrow$ Realteil (Dispersion) $i\beta \rightarrow$ Imaginärteil (Absorption)) des Probenträgermaterials zu $\theta_c = \sqrt{2\delta}$ ($\theta_c$ [rad] im Bogenmaß). Der Grenzwinkel $\theta_c$ ist umso kleiner je größer die Photonenenergie der verwendeten Strahlung ist und liegt z.B. bei Mo K-Strahlung für einen Quarzträger bei ca. 0,1°. Je kleiner aber der Einfallswinkel $\theta_c$ ist, umso größer ist die Projektion des Primärstrahlquerschnittes auf dem Probenträger. Die Nachweisempfindlichkeit (bezogen auf die Zahl der nachzuweisenden Atome pro Fläche) der Totalreflexionsröntgenfluoreszenzanalyse (TXRF) wird daher im wesentlichen durch die erreichbare Photonendichte der anregenden Primärstrahlung pro Flächeneinheit begrenzt.

Die Erhöhung der Photonendichte der Röntgenstrahlung durch Fokussierung poly- oder monochromatischer Strahlung ist möglich, besitzt aber aufgrund der kleinen Winkel $\theta_c$ kaum praktische Bedeutung.

Bei der Totalreflexion ist der im Probenträger gebrochene Strahlungsanteil zur exponentiell in die Tiefe abklingenden Oberflächenwelle degradiert und die Eindringtiefe (nur wenige Nanometer i.a. <10 nm) der Röntgenstrahlung in die Probe ist dispersionskontrolliert. Typischerweise mehr als 95% der einfallenden Strahlung werden reflektiert.

Durch die Begrenzung des mit der Probe angeregten Probenträgervolumens auf wenige Nanometer ist ein sehr hohes Signal- zu Untergrund-Verhältnis zu verzeichnen. Die in diesem oberflächennahen Bereich erzeugten Anteile des Untergrundes erreichen aber den Detektor in ungeschwächter Form und werden demzufolge mitgemessen.

Eine auf diesen Erkenntnissen beruhende Meßanordnung ist in EP 0 456 897 A1 beschrieben. Dort wird eine Röntgenstrahlungsquelle verwendet, deren Röntgenstrahlung mittels mindestens einer Reflektoreinheit unter den Bedingungen der Totalreflexion auf einen Probenträger gerichtet wird. Die so angeregte Fluoreszenzstrahlung wird mit einem Detektor gemessen und die Probe entsprechend analysiert. Ein zweiter Detektor erfaßt die auf dem Probenträger reflektierte Röntgenstrahlung und durch winkelaufgelöste Messung kann durch entsprechende Manipulation der Reflektoreinheit und des Probenträgers die Einhaltung des Grenzwinkels der Totalreflexion nachjustiert werden. Die Probe wird unmittelbar auf den Probenträger angeordnet. Auf der Reflektoreinheit ist eine sich periodisch wiederholende Folge von zwei oder mehr Sichten, aus Materialien mit unterschiedlichem Brechungsindex ausgebildet. Dabei sind Schichten genannt von denen bei einem solchen Schichtpaar zumindest eine Schicht relativ großatomig ist. Es werden also sogenannte Vielschichtspiegel zur Beugung der Röntgenstrahlung an der Reflektoreinheit benutzt. Die Fluoreszenzanregung erfolgt aber ausschließlich unter der Bedingung der Totalreflexion auf dem Probenträger unter in Kaufnahme der genannten und bekannten Nachteile.

Es ist daher Aufgabe der Erfindung die Nachweisempfindlichkeit für verschiedenste Proben zu erhöhen.

Erfindungsgemäß wird diese Aufgabe mit den Merkmalen des Anspruchs 1 gelöst. Vorteilhafte Ausgestaltungen und Weiterbildungen der Erfindung sind mit den in den untergeordneten Ansprüchen enthaltenen Merkmalen erreichbar.

Bei der erfindungsgemäßen Vorrichtung wird die Strahlung einer Röntgenstrahlungsquelle zur Fluoreszenzanregung einer Probe, die fest oder fluidisch sein kann, auf ein als Probenträger dienendes Multischichtsystem gerichtet. Das Multischichtsystem besteht aus mehreren Schichten, die jeweils aus Materialien mit unterschiedlichem röntgenoptischen Brechungsindex bestehen. Die Periodendicke d einer Periode erfüllt die BRAGG'sche- Gleichung unter Berücksichtigung des Einfallswinkels $\Omega_m$ der Strahlung mit $\lambda$ auf die Oberfläche des Multischichtsystems. Die Periodendicke d und die Folge von Einzelschichten kann für jeweils benachbarte Perioden im Multischichtsystem konstant sein, wobei man in diesem Fall von peri odisch aufgebauten Multischichtsystemen sprechen kann.

Es besteht alternativ bei der Erfindung aber auch die Möglichkeit, den Aufbau des Multischichtsystems über die Änderung einer oder mehrerer Einzelschichtdicken so zu modifizieren, dass gegenüber dem periodischen Aufbau eine höhere Reflektivität und/oder eine kleinere Winkelakzeptanz bei vorgegebenen $\Omega_m$ und Wellenlänge $\lambda$ der einfallenden Röntgenphotonen erzielt wird. Man spricht in diesem Fall von aperiodisch aufgebauten Multischichtsystemen.

Bei Verwendung einer oder mehrerer Reflektoreinheit(en) muß beachtet werden, daß die von diesem Multischichtsystem reflektierten und auf das auf dem Probenträger angeordnete Multischichtsystem gerichteten Röntgenphotonen die BRAGG'sche Gleichung am Probenort erfüllen. Dabei kann eine Beeinflussung des Einfallswinkels der Strahlung durch Bewegung des Probenträgers und/oder mit mindestens einer Reflektoreinheit, die im Strahlengang zwischen Röntgenstrahlungsquelle und Oberfläche des Multischichtsystems angeordnet ist, erfolgen.

Auf das verwendete Multischichtsystem auf dem Probenträger kann unter Berücksichtigung der BRAGG-Beziehung

$$m \; * \; \lambda \; = \; 2d_{eff} \; * \; \sin \Omega_m$$

m - ganzzahlig 1, 2, 3 ....

$$d_{eff} = d\left(1 - \frac{\overline{\delta}}{\sin^2\theta_m}\right)$$

{ d Periodendicke des Multischichtsystems

$$\overline{\delta} = \frac{1}{d}\sum_{i=1}^{m} d_i \delta_i$$

nach der Dicke gewichtetes Mittel der Realteile des Brechungsindex aller Schichten einer Periode }

die Strahlung mit einem wesentlich größeren Einfallswinkel auf die Oberfläche des Multischichtsystems gerichtet werden, als dies bei Totalreflexion der Fall ist. Dabei kann die Photonendichte/Flächenelement der anregenden Röntgenstrahlung um den Faktor sin $\theta_m$/sin $\theta_c$ größer sein, als dies bei Totalreflexion der Fall ist, wenn der reflektierte Strahlungsanteil prozentual im gleichen Bereich, wie bei einer Totalreflexion liegt. $\theta_m$ ist hierbei der BRAGG-Winkel des m-ten Maximums, der größer als der Grenzwinkel für Totalreflexion $\theta$ ist und der im wesentlichen von der Periodendicke d der Schichtpaare des Multischichtsystems bestimmt wird und nicht von $\delta$ Werten der Schichten bestimmt wird.

Die höchsten Reflektivitäten von Multischichtsystemen findet man in der 1. Ordnung (m = 1).

In Abhängigkeit der Größe der Reflektivität bildet sich auf der Oberfläche des auf dem Probenträger angeordneten Multischichtsystems ein stehendes Wellenfeld aus, das zur Fluoreszenzanregung der Probe ausgenutzt werden kann. Bei geeigneter Wahl von Periodenzahl, Periodendicke und Schichtmaterialien im Multischichtsystem können Reflektivitäten erreicht werden, die fast denen bei Totalreflexion entsprechen (R > 90%).

Das Multischichtsystem kann, z.B. mit bekannten Verfahren der Dünnschichttechnik (PLD, CVD, Sputtern o.a.) auf einem Substrat ausgebildet werden.

Die Einzelschichten und das Substrat sollten aus Elementen bzw. Verbindungen von Elementen mit Ordnungszahlen Z < 10 bestehen. Die Fluoreszenzlinien der Schicht- und gegebenenfalls Substratmaterialien liegen dadurch nicht im Energieintervall der nachzuweisenden Elemente in der Probe und tragen nicht zum Untergrund bei. Dadurch können Elemente mit größeren Ordnungszahlen mit hoher Nachweisempfindlichkeit detektiert werden.

Geeignete Elemente sind H, B, Be, Li, N und C sowie die Verbindungen $B_4C$ und $CN_x$. Günstig können auch die verschiedenen Modifikationen des Kohlenstoffs, als diamantähnlicher und graphitähnlicher Kohlenstoff, in einem Schichtpaar eingesetzt werden. Ebenfalls sind organische Kohlenstoff-Verbindungen bestehend aus C, N, O und H denkbar.

Glaskohlenstoff ist ein geeignetes Substratmaterial, auf dem ein entsprechendes Multischichtsystem ausgebildet werden kann. Glaskohlenstoff ist z.B. unter der Bezeichnung Sigradur kommerziell erhältlich. Vorteilhaft ist es, einen solches Multischichtsystem, auch zur Strahlformung und/oder Monochromatisierung auch auf mindestens einer Reflektoreinheit zu verwenden, damit die Fluoreszenzlinien der Reflektoreinheit(en) nicht im nachzuweisenden Energieintervall liegen.

Mit der Erfindung kann gegenüber der herkömmlichen Totalreflexionsröntgenanalyse die Photonendichte der anregenden Röntgenstrahlung um ein Mehrfaches erhöht werden, ohne daß eine Verschlechterung des Signal-Untergrund-Verhältnisses auftritt. Außerdem ist eine effektivere Fokussierung polychromatischer Röntgenstrahlung möglich, wobei hierzu nachfolgend noch auf mögliche Realisierungen hingewiesen wird. Bei der Fokussierung sollte beachtet werden, daß jedes Photon im Auftreffpunkt auf das Multischichtsystem die BRAGG-Bedingung erfüllt. Realisierbar ist dies, wenn die Wellenlänge der einfallenden Photonen entsprechend der BRAGG'schen Gleichung mit dem Einfallswinkel steigt, also eine richtungsabhängige Monochromatisierung jedes Teilstrahles erfolgt.

Unter Einhaltung dieser Bedingung kann mit einer Reflektoreinheit polychromatische Anregungsstrahlung mit einem Öffnungswinkel der konvergenten Strahlung, der um ein Vielfaches größer als der Einfallswinkel für Totalreflexion ist, auf die Oberfläche des auf dem Probenträger angeordneten Multischichtsystems fokussiert werden.

So kann eine divergente polychromatische Röntgenstrahlung mittels elliptisch gekrümmter Gradientenschichtsysteme auf mindestens einer Reflektoreinheit in eine solche polychromatische, d.h. richtungsabhängig monochromatisierte Strahlung umgewandelt werden, die auf die Oberfläche des auf dem Probenträger angeordneten Multischichtsystems entsprechend der Reflexionsbedingungen fokussiert werden kann.

In analoger Weise kann parallele polychromatische Strahlung mit parabolisch gekrümmten Gradientenmultischichtsystemen auf eine Probe fokussiert werden.

Für die Fokussierung der Röntgenstrahlung auf ein auf dem Probenträger angeordnetes Multischichtsystem kann auch ein Multischichtsystem einer Reflektoreinheit mit der Form einer logarithmischen Spirale verwendet werden.

Wird die Strahlung nicht auf das Multischichtsystem auf dem Probenträger fokussiert, besagt die BRAGG'sche Gleichung, daß monochromatische Prallelstrahlung einfallen muß.

Eine divergente polychromatische Röntgenstrahlung kann mit einem entsprechenden parabolisch gekrümmten Multischichtsystem, dessen Periodendikken d der Schichtpaare als Gradientenperiodendicken gewählt sind, in eine monochromatische parallele Strahlung umgewandelt werden, wobei die Periodendickenvertiefung im Multischichtsystem auf einer Reflektoreinheit sichert, daß die auf das auf einen Probenträger angeordnete Multischichtsystem auftreffende Röntgenphotonen, die BRAGG'sche Gleichung erfüllen.

Parallele polychromatische Strahlung kann mit einem ebenen Multischichtsystem, mit konstanter Periodendicke d in eine monochromatische parallele Strahlung umgewandelt werden.

Für den gleichzeitigen Nachweis der Fluoreszenzstrahlung verschiedener Elemente kann ein energiedispersiver Detektor zur Erfassung der Fluoreszenz verwendet werden.

Vorteilhaft ist es, den Detektor für die Energieauflösung zu kühlen, wobei ein peltiergekühlter Detektor mit Lithium-Peltierelement oder flüssiger Stickstoff verwendet werden kann.

Außerdem besteht die Möglichkeit eine Polykapillaroptik zwischen dem Detektor und dem auf dem Probenträger angeordneten Multischichtsystem anzuordnen, um eine ortsaufgelöste Messung zu ermöglichen. Der Fokus der Polykapillaroptik wird dabei auf die Probe durch Höhenverschiebung justiert.

Für verschiedene Applikationen kann es günstig sein, den Probenträger zu temperieren. So können bei Bedarf feste bzw. flüssige Proben durch Erwärmung verdampft und die Fluoreszenz-Analyse im Nachgang dazu durchgeführt werden.

Für bestimmte Proben bzw. Analysen kann aber auch eine Kühlung sinnvoll sein.

Als Röntgenstrahlungsquellen können Synchrotrone, Drehanoden oder auch Röntgenröhren verwendet werden. Dabei sind lediglich die verschiedenen Strahlungsdivergenzen (z.B. Mikrofokus oder Feinfokusröhren) und Wellenlängen, insbesondere beim Layout des/der Multischichtsysteme(s) zu berücksichtigen. Der modulare Aufbau der Meßanordnung sichert die einfache Anpassung an die verschiedenen Röntgenstrahl-Quellen. Vorteilhaft ist es außerdem, wenn die Einhaltung des BRAGG-Winkels und des BRAGG-Maximums mittels eines zweiten Detektors überwacht wird. Dieser mißt die Intensität der an der Oberfläche des auf dem Probenträger angeordneten Multischsichtsystems reflektierten Strahlung. Dabei erfolgt sinnvollerweise eine ortsaufgelöste Messung, z.B. mit einem zeilenförmig ausgebildeten Detektor oder einem Detektorarray. Anhand der gemessenen Strahlungsintensität kann die Strahlführung und hier der Einfallswinkel der anregenden Strahlung auf die Oberfläche des Multischichtsystems entsprechend so variiert werden, daß maximale Intensität gemessen wird. Hierzu kann die Position des Multischichtsystems auf dem Probenträger in Bezug zur einfallenden Röntgenstrahlung, durch z.B. horizontale und/oder vertikale Verschiebung oder ein Verschwenken, um eine Horizontalachse, angepaßt werden, um im optimalen Bereich zu messen.

Eine entsprechende Beeinflussung kann aber auch allein oder zusätzlich durch entsprechende Bewegungen an der/den Reflektoreinheit(en) erreicht werden. In jedem Fall ist jedoch eine Positioniermöglichkeit in mindestens einem Freiheitsgrad für Probenträger und/oder Reflektoreinheit wünschenswert.

Werden mehrere Reflektoreinheiten nacheinander im Strahlengang der anregenden Strahlung angeordnet, kann die Strahlrichtung in verschiedenster Form, je nach Anzahl und Winkelausrichtung, beeinflußt werden.

Die Erfindung kann vorteilhaft für die Umweltanalyse und hier insbesondere für den Nachweis geringster Konzentrationen toxischer bzw. anderer Stoffe eingesetzt werden.

Eine andere Verwendungsmöglichkeit wäre die on-line Überwachung von Vakuumbeschichtungsverfahren, wobei hier die Beschichtungsatmosphäre überwacht werden kann.

In der Halbleitertechnik/Mikroelektronik steigen die Anforderungen an die chemische Reinheit der Wafer ständig. Demzufolge muß die Nachweisempfindlichkeit auch verbessert werden. Dies ist durch Kombination des bekannten VPD-Verfahrens mit der Erfindung und der so erreichbaren Senkung der Nachweisgrenze möglich.

Wie bereits erwähnt, können Proben in verschiedenster Phase analysiert werden.

(a) Für Fluide ist es jedoch von Bedeutung diese unter bestimmten Strömungsbedingungen in bzw. über den Analysebereich an der Oberfläche des auf dem Probenträger angeordneten Multischichtsystems zu führen.

(b) So können partikelförmige Proben auf einem Multischichtsystem analysiert werden.

(c) Eine flüssige Probe kann z.B. mittels VPD (Vapour phase decomposition) von einem Si-Wafer gewonnen werden oder, wie z.B. Seewasser direkt aus der Umwelt entnommen werden.

Die Vorrichtung kann mit ihren verschiedenen Elementen in einem geschlossenen Gehäuse ausgebildet sein. Im Gehäuse kann die jeweilige Analyse im Vakuum durchgeführt werden. Es kann jedoch auch in einer inerten Stickstoff- oder Heliumatmosphäre oder andere Gasatmosphären (Z s 10) detektiert werden, wenn z.B. die Fluoreszenz des in der Luft enthaltenen Argons stark zum Untergrund beiträgt.

Nachfolgend soll die Erfindung beispielhaft erläutert werden.

Dabei zeigen:

Figur 1      den schematischen Aufbau eines Beispiels einer erfindungsgemäßen Vorrichtung;

Figur 2 a - d      Diagramme des einfallswinkelabhängigen Reflexionsvermögens;

Figur 3      ein Diagramm des reflektierten und absorbierten Strahlungsanteils im Si-lizium;

Figur 4      ein Diagramm des reflektierten und absorbierten Anteils von Strahlung, bei einem Multischichtsystem mit al-ternierend angeordneten C/C-Einzel-schichten;

Figur 5      ein Diagramm des im BRAGG-Maximum mi-nimierten absorbierten Strahlungsan-teils;

Figur 6      die Intensität eines stehenden Wellenfeldes ausgehend oberhalb der Oberfläche eines C/C-Multischichtsystems bis in das Multischichtsystem hinein;

Figur 7      eine schematische Darstellung, wie eine divergente Röntgenstrahlung in eine parallele monochromatische Strah-lung umgewandelt werden kann und

Figur 8      eine schematische Darstellung, wie eine parallele Röntgenstrahlung auf eine Oberfläche fokussiert werden kann.

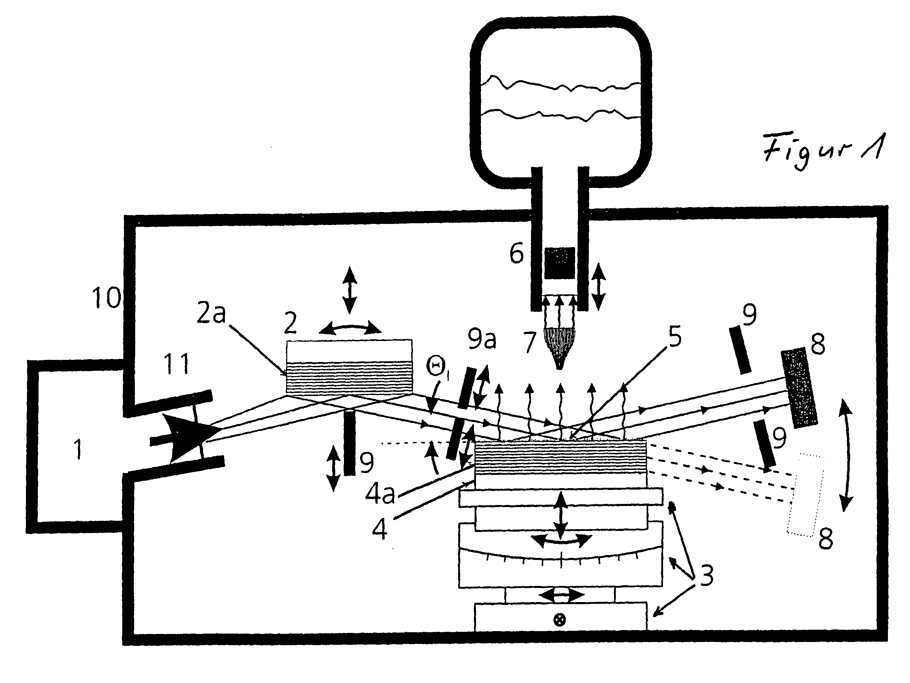

In der Figur 1 ist ein Beispiel einer erfindungsgemäßen Vorrichtung schematisch gezeigt. Dabei ist eine Röntgenstrahlquelle 1 an ein Gehäuse 10 angeflanscht und über eine Strahleintrittsöffnung 11, mit bzw. ohne Fenster wird Röntgenstrahlung auf eine Reflektoreinheit 2 gerichtet, auf deren reflektierender Fläche ein Multischichtsystem 2a ausgebildet ist, das die Bedingungen, wie sie im allgemeinen Teil der Beschreibung genannt sind, erfüllt. Ein Fenster an der Strahleintrittsöffnung 11 ist beim Arbeiten im Vakuum erforderlich. Von der Oberfläche des Multischichtsystems 2a wird die Strahlung auf ein zweites Multischichtsystem 4a, das hier auf einem Probenträger 4 angeordnet ist, gerichtet und von der Oberfläche des Multischichtsystems 4a teilweise reflektiert. Die Probe 5 befindet sich auf dem Multischichtsystem 4a.

Bei Einhaltung der BRAGG-Bedingungen (Periodendicke d im Schichtstapel und eines entsprechenden Einfallswinkels $\theta_m$; bevorzugt m = 1) bildet sich ein stehendes Röntgenwellenfeld, mit relativ hoher Intensität oberhalb der Oberfläche des Multischichtsystems 4a aus und es wird Fluoreszenz in einer dort plazierten Probe 5 angeregt. Die Fluoreszenz wird mit dem Detektor 6, bevorzugt energiedispersiv gemessen. Der Detektor 6 wird, wie schematisch angedeutet von außen gekühlt.

Zwischen Schichtstapel 4a und Detektor 6 ist optional für eine ortsaufgelöste Messung eine polykapillare Optik 7 einfügbar.

Zur Strahlbegrenzung sind mehrere Blenden 9 vorhanden.

Die Blende 9a, deren Position und Spaltbreite variierbar ist, kann aus dem vom Multischichtsystem 2a reflektierten Strahl Anteile zur Anregung der Probe ausblenden. Die Blende 9a kann z.B. zumindest entlang einer Achse translatorisch verschoben werden. Mittels einer Blende 9a kann ein bestimmtes Wellenlängen-Teilintervall einer polychromatischen von einem Multischichtsystem 2a einer Reflektoreinheit 2 auf das Multischichtsystem 4a fokussierte Strahlung ausgeblendet werden.

Bei diesem Beispiel ist ein zweiter Detektor 8 vorhanden, mit dem die Einhaltung der BRAGG-Bedingung überwacht werden kann. In Abhängigkeit der mit dem zweiten Detektor gemessenen Strahlungsintensität kann der Einfallswinkel $\theta_m$, bevorzugt mit m = 1 nachgeregelt werden.

Eine entsprechende Beeinflussung des Einfallswinkels $\theta_m$ kann durch entsprechende Bewegungen der Reflektoreinheit 2 und/oder des Probenträgers 4, mit einem Manipulator 3 erreicht werden, wobei translatorische oder auch Schwenkbewegungen, wie mit den verschiedenen Doppelpfeilen angedeutet, möglich sind.

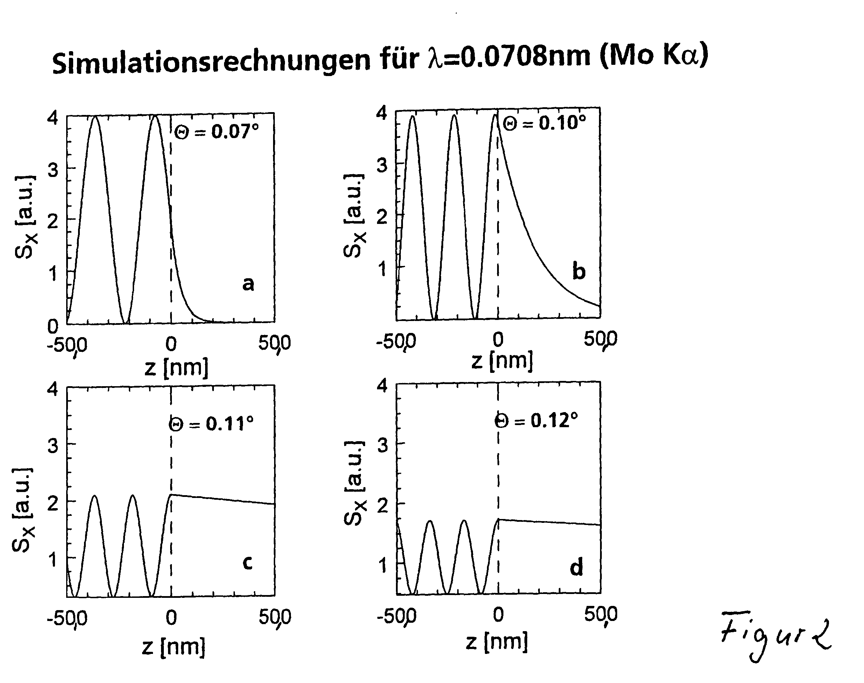

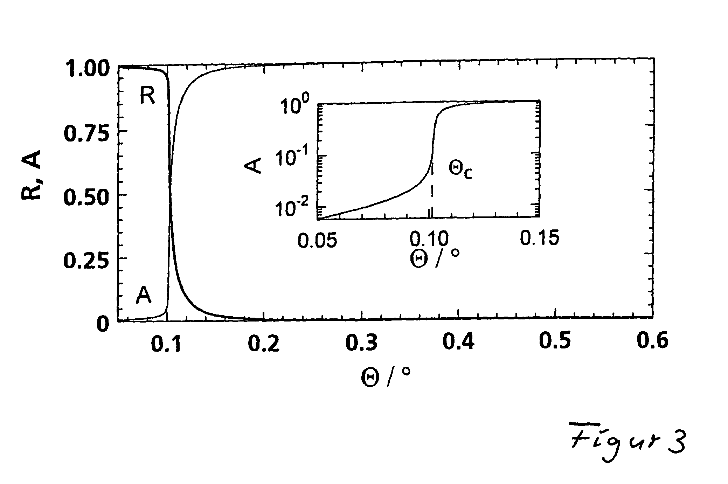

Die Figuren 2 und 3 charakterisieren die den Stand der Technik bestimmende TXRF-Methode näher.

Die in den Figuren 2 a bis d gezeigten Diagramme zeigen, daß sich in Abhängigkeit vom einfallswinkelabhängigen Reflexionsvermögen einer Oberfläche ein mehr oder weniger stark ausgeprägtes stehendes Wellenfeld oberhalb einer Oberfläche ausbildet. Es kann lokal die vierfache Intensität der eingesetzten Primärstrahlung erreicht werden. In den Figuren 2a und 2b sind die Verhältnisse $S_x = f(z)$ bei Einfallswinkeln unterhalb des Grenzwinkels der Totalreflexion und in den Figuren 2c und 2d $\theta > \theta_c$ Einfallswinkel größer als der Grenzwinkel $\theta_c$, bei einer Silizium-Oberfläche und MoK$\alpha$ - Primärstrahlung berücksichtigt.

Dem in Figur 3 wiedergegebenen Diagramm sind die sich in erster Näherung zu 100% ergänzenden reflektierten und absorbierten Strahlungsanteile am/im Silizium zu entnehmen. Im Inset ist der absorbierte Anteil in Abhängigkeit des Einfallswinkels dargestellt. Nahe $\theta_c$ liegt er bei 5%. Dieser Anteil, je nach Wahl des Arbeitspunktes, bildet mit dem an einer Probe gestreuten Strahlungsanteil der Primärstrahlung den Untergrund im gemessenen Signal.

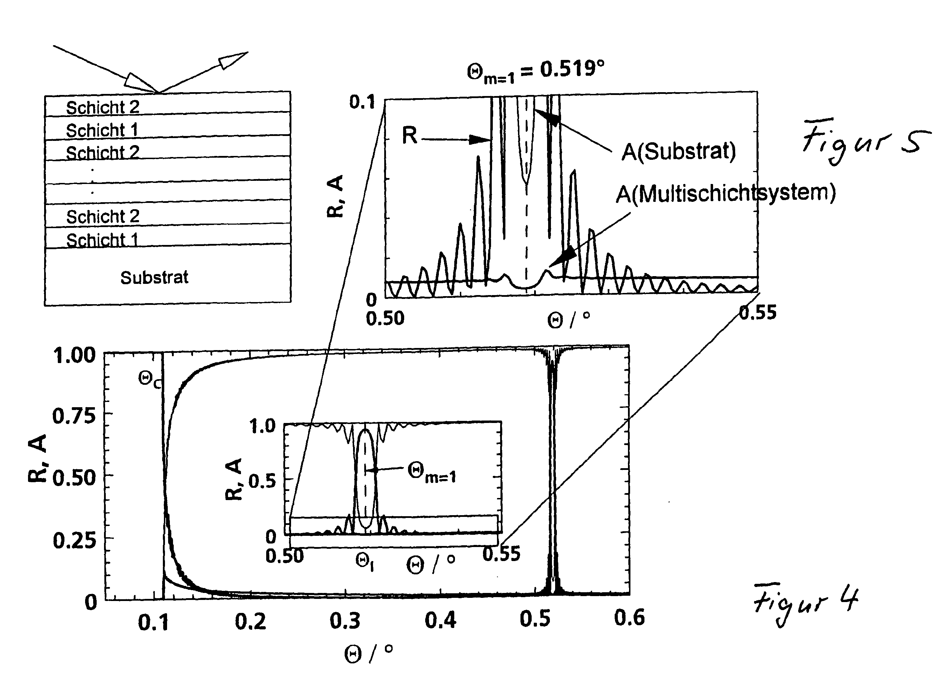

Die Figuren 2a bis 2d und 3 sollen verdeutlichen, wie in der TXRF das sehr gute Signal-Untergrund-Verhältnis zustande kommt und warum das Verfahren auf $\theta < \theta_c$ beschränkt ist. Die Figuren 4 bis 6 sollen zeigen, warum auch im BRAGG-Winkel $\theta_{m=1}$ ein ähnlich gutes Signal-Untergrund-Verhältnis basierend auf einem anderen physikalischem Prinzip entstehen kann.

Für ein Multischichtsystem mit aus alternierend aus diamantähnlichem und graphitähnlichem Kohlenstoff bestehenden Einzelschichten, der auf einem Glaskohlenstoffsubstrat ausgebildet ist, können die verschiedenen berechneten Verhältnisse in den Figuren 4 bis 6 entnommen werden.

Ein C/C Multischichtsystem wurde mit 200 Schichtpaaren und einer Periodendicke d = 4 nm berücksichtigt. Die graphitähnlichen Kohlenstoffschichten besitzen eine Dichte von 2,2 g/cm$^3$ und die diamantähnlichen Kohlenstoffschichten eine Dichte von 3,5 g/cm$^3$. Daraus resultiert ein ausreichender röntgenoptischer Kontrast zwischen den beiden Kohlenstoffmodifikationen.

Dem Diagramm nach Figur 4 können die reflektierten und im Multischichtsystem absorbierten Anteile der zur Anregung benutzten Primärstrahlung entnommen werden. Es wird deutlich, daß innerhalb des Bereiches der Totalreflexion die Verhältnisse, denen wie sie den Figuren 2 a-d und Figur 3 entnommen werden können, entsprechen. Außerhalb des Totalreflexionsbereiches sind nur nahe dem BRAGG-Maximum entsprechende Reflektivitäten zu verzeichnen, wie dies im Inset dargestellt ist. Der im Substrat absorbierte Anteil hat im Reflektivitätsmaximum seinen kleinsten Wert. Dies trifft auch auf den im Multischichtsystem absorbierten Anteil zu (Figur 5).

Der Anteil der im Substrat absorbiert wird (ca. 5%) kann Streustrahlung erzeugen. Diese gelangt jedoch erst nach Durchgang durch das Multischichtsystem zum Detektor. Bei Einhaltung der BRAGG-Bedingungen wird weniger als 1% absorbiert.

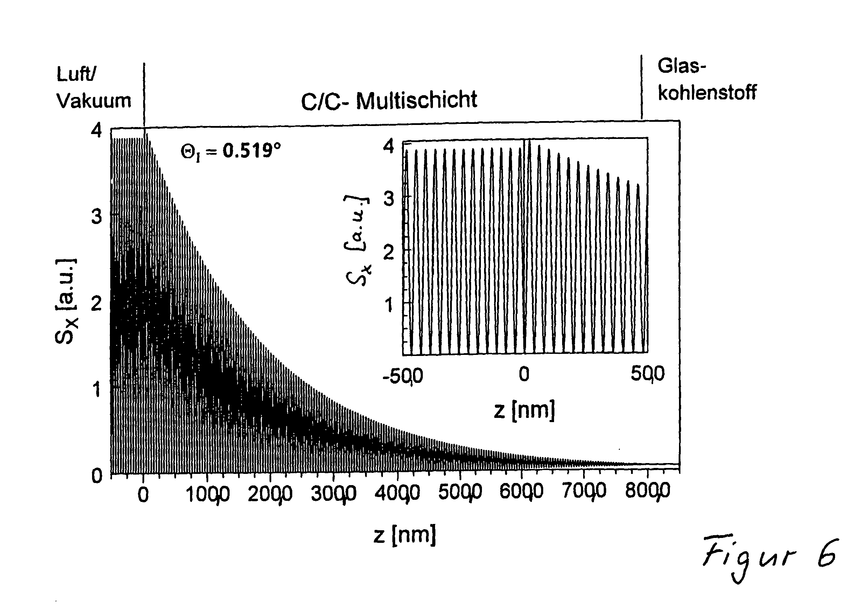

Mit Figur 6 wird die Ausbildung des stehenden Wellenfeldes als verlauf $S_x$ = f(z) verdeutlicht. Das Wellenfeld bildet sich nicht nur oberhalb der Oberfläche des Multischichtsystems, sondern auch in seinem Inneren aus. Dabei ist eine Intensitätsverringerung mit steigender Tiefe im Multischichtsystem erkennbar.

Die Periode des Wellenfeldes entspricht der Periodendicke d des Multischichtsystems. Infolge der Ausbildung eines stehenden Wellenfeldes erreicht die parallel zur Oberfläche verlaufende Komponente der Energiestromdichte $S_x(z)$ auf der Oberfläche des Multischichtsystems lokal Werte, die viermal größer sind, als die zur Fluoreszenzanregung verwendete Primärstrahlung.

Für die Anregung der Fluoreszenz in der Probe kann eine monochromatische Parallelstrahlung verwendet und damit ein größerer Flächenbereich detektiert werden.

Hierfür kann zum einen eine entsprechende parallele polychromatische Strahlung (z.B. Synchrotronstrahlung) verwendet werden, die auf ein ebenes Multischichtsystem mit konstanter Periodendicke d gerichtet wird. Zum anderen kann aber divergente polychromatische Strahlung mit einem parabolisch gekrümmten Multischichtsystem in monochromatische Parallelstrahlung umgewandelt werden. Das Multischichtsystem ist als Gradientenschichtsystem ausgebildet, d.h. die Schichtdicke der Einzelschichten und demzufolge auch die Periodendicke d ist nicht konstant, sondern sie steigt von einer Seite des Multischichtsystems zur anderen kontinuierlich an und zwar so, daß in jedem Flächenelement auf der parabolisch gekrümmten Fläche die BRAGG-Bedingung erfüllt ist und maximale Intensität im Parallelstrahl zu finden ist.

Es gilt auf dem Probenträger am Ort der Probe

$$\lambda = 2d\sqrt{\sin^2\theta_{m=1} - 2\overline{\delta}}$$

$\overline{\delta}$ = abgeleitet aus dem nach Schichtdicke gewichteten Mittel der δ-Werte aller Schichten eines Multi- schichtsystems (gebildeter Realteil des Brechungsindex aller Schichten)

$\lambda$ = Röntgenwellenlänge

$\theta_{m=1}$ = Winkellage BRAGG-Peak 1. Ordnung,

wobei die parabolisch gekrümmte Reflektoreinheit 2 genau dann Prallelstrahlung der Wellenlänge λ erzeugt, wenn auf jedem Flächenelement des Multischichtsystems 2a gilt:

$$d_{\delta Aj} = \frac{\lambda}{2\cdot\sqrt{\sin^2\theta(Aj) - 2\overline{\delta}_{Aj}}}$$

$\theta(Aj)$ = ableitbar aus dem Abstand des Flächenelementes von dem Parabelparameter p und dem Abstand vom Fokuspunkt

$$y = \sqrt{2px}$$

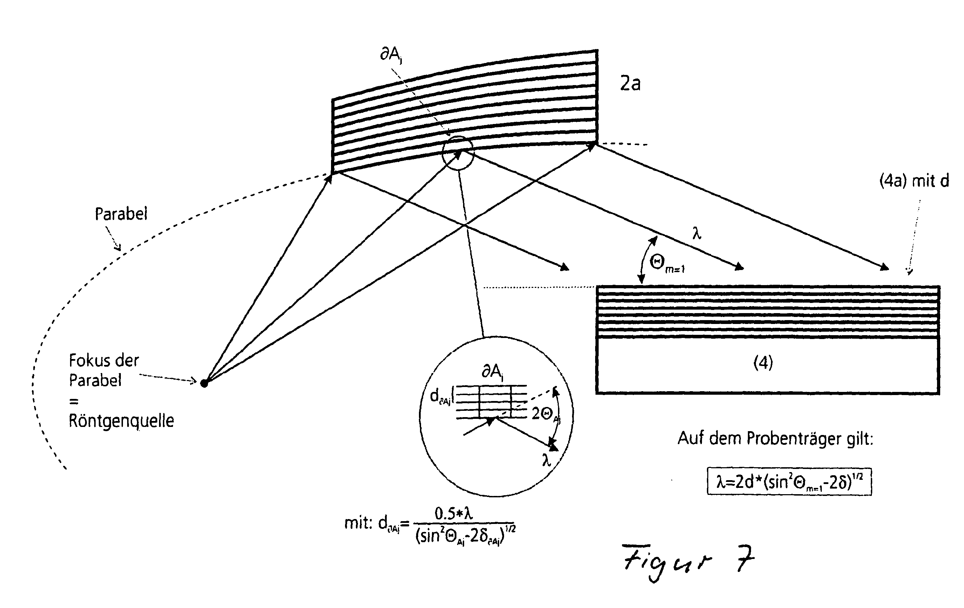

Dieser Sachverhalt ist schematisch in Figur 7 gezeigt. Für eine solche Strahlungsumwandlung kann mindestens eine Reflektoreinheit entsprechend ausgebildet und verwendet werden.

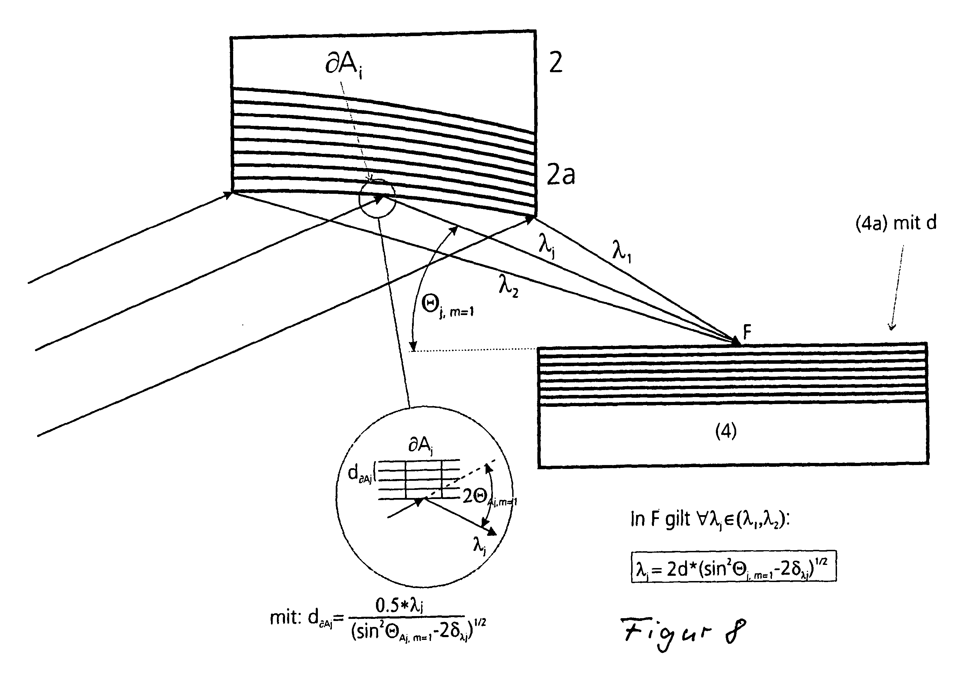

Es kann aber auch, wie in Figur 8 verdeutlicht, polychromatische Strahlung auf eine Oberfläche zur Detektion einer Probe fokussiert werden.

Hierfür kann ein parabolisch (für einen Parallelstrahl) oder ein elliptisch (für einen divergenten Strahl) gekrümmtes Gradientenschichtsystem verwendet werden. Dabei muß die partielle Monochromatisierung eines j-ten Flächenelements auf das Multischichtsystem 2a so sein, daß die auf dem Multischichtsystem 4a reflektierten Photonen mit der Wellenlänge $\lambda_j$ mit dem Einfallswinkel

$\theta_{jm=1}$ so auf die Periodendicke d des Multischichtsystems 4a abgestimmt ist, daß für jedes anregende Röntgenphoton auf der Oberfläche die BRAGG'sche Gleichung gilt.

Es gilt für alle $\lambda_j \in (\lambda_1, \lambda_2)$ im Auftreffpunkt F auf dem Multischichtsystem 4a

$$\lambda_i = 2d * \sqrt{\sin^2 \theta_{j,m=1} - 2\delta_{\lambda i}}$$

$$\overline{\delta}(\lambda_i)$$

(wellenlängenabhängiges mittleres $\overline{\delta}$, gewichtet nach der Schichtdicke - ermittelt aus den $\delta$-Werten aller Schichten)

= Funktion der Wellenlänge mittlerer Realteil des Brechungsindes aller Schichten, bei $\lambda_i$.

**Patentansprüche**

1. Vorrichtung zur Röntgenfluoreszenzanalyse, bei der eine Röntgenstrahlungsquelle Röntgenstrahlung auf eine auf einem Probenträger befindliche Probe richtet und zur Bestimmung der Fluoreszenzstrahlung ein Detektor (6) vorhanden ist, **dadurch gekennzeichnet, dass** die Probe auf einem Multischichtsystem (4a) angeordnet oder eine fluidische Probe über das Multischichtsystem (4a) strömt, wobei das Multischichtsystem aus mehreren sich periodisch wiederholend angeordneten Einzelschichten gebildet ist und benachbarte Einzelschichten aus Materialien mit verschiedenem röntgenoptischen Brechungsindex bestehen; und die Periodendicken d im Multischichtsystem (4a) und der Einfallswinkel θ der Röntgenstrahlung, bei der verwendeten Röntgenstrahlungswellenlänge λ die BRAGG' sche-Gleichung erfüllen.

2. Vorrichtung zur Röntgenfluoreszenzanalyse, bei der eine Röntgenstrahlungsquelle Röntgenstrahlung auf eine auf einem Probenträger befindliche Probe richtet und zur Bestimmung der Fluoreszenzstrahlung ein Detektor (6) vorhanden ist, **dadurch gekennzeichnet, dass** die Probe auf einem Multischichtsystem (4a) angeordnet oder eine fluidische Probe über das Multischichtsystem (4a) strömt, wobei das Multischichtsystem als ein aperiodisch aufgebautes Multischichtsystem, bei dem eine oder mehrere Einzelschichtdicken verändert sind, ausgebildet ist und benachbarte Einzelschichten aus Materialien mit verschiedenem röntgenoptischen Brechungsindex bestehen; und die Periodendicken d im Multischichtsystem (4a) und der Einfallswinkel θ der Röntgenstrahlung, bei der verwendeten Röntgenstrahlungswellenlänge λ die BRAGG' sche-Gleichung erfüllen.

3. Vorrichtung nach Anspruch 1 oder 2, **dadurch gekennzeichnet, dass** das Multischichtsystem (4a) auf dem Probenträger oder einem Substrat ausgebildet ist.

4. Vorrichtung nach einem der vorhergehenden Ansprüche, **dadurch gekennzeichnet, dass** die Einzelschichten und das Substrat aus Elementen mit einer Ordnungszahl Z > 10 oder Verbindungen dieser Elemente bestehen.

5. Vorrichtung nach einem der Ansprüche 1 bis 4, **dadurch gekennzeichnet, dass** zwischen Röntgenstrahlungsquelle (1) und Multischichtsystem (4a) im Strahlengang der Röntgenstrahlung mindestens eine Reflektoreinheit (2) angeordnet ist.

6. Vorrichtung nach einem der Ansprüche 1 bis 5, **dadurch gekennzeichnet, dass** auf der/den Reflektoreinheit(en) (2) ein Multischichtsystem (2a), das aus mehreren sich periodisch wiederholend angeordneten Einzelschichten besteht und jeweils benachbart angeordnete Einzelschichten verschiedene röntgenoptische Brechungsindizie aufweisen.

7. Vorrichtung nach einem der Ansprüche 1 bis 6, **dadurch gekennzeichnet, dass** die Periodendicke d der einzelnen Schichtpaare eines Multischichtsystems (2a, 4a) im Bereich zwischen 1 nm bis 20 nm liegt.

8. Vorrichtung nach einem der Ansprüche 1 bis 7, **dadurch gekennzeichnet, dass** die Einzelschichten aus $B_4C$, BN, $CN_x$, B, Be, Li oder aus verschiedenen Modifikationen des Kohlenstoffs oder organischen Verbindungen mit C, H, N und 0 bestehen.

9. Vorrichtung nach einem der Ansprüche 3 bis 8, **dadurch gekennzeichnet, dass** das Substrat aus Glaskohlenstoff besteht.

10. Vorrichtung nach einem der Ansprüche 1 bis 9, **dadurch gekennzeichnet, dass** zur Bestimmung der Fluoreszenzstrahlung ein energiedispersiver Detektor (6) vorhanden ist.

11. Vorrichtung nach einem der Ansprüche 1 bis 10, **dadurch gekennzeichnet, dass** zwischen Detektor (6) und Multischichtsystem (4a) mit Probe für eine ortsaufgelöste Messung der Fluoreszenzstrahlung eine Polykapillaroptik (7) angeordnet ist.

12. Vorrichtung nach einem der Ansprüche 1 bis 11, **dadurch gekennzeichnet, dass** der Probenträger (4) temperierbar ist.

**13.** Vorrichtung nach einem der Ansprüche 1 bis 12, **dadurch gekennzeichnet, dass** ein zweiter Detektor (8) zur Messung der Intensität der an der Oberfläche des Multischichtsystems (4a) reflektierten Röntgenstrahlung vorhanden ist.

**14.** Vorrichtung nach einem der Ansprüche 1 bis 13, **dadurch gekennzeichnet, dass** der Probenträger (4) mit Multischichtsystem (4a) und/oder die Reflektoreinheit(en) (2) mit mindestens einem Freiheitsgrad translatorisch beweg- und/oder verschwenkbar ist/sind.

**15.** Vorrichtung nach einem der Ansprüche 1 bis 14, **dadurch gekennzeichnet, dass** die Elemente (2, 4, 6, 7, 8) in einem geschlossenen, evakuierbaren oder mit einem inerten Gas befüllbaren Gehäuse aufgenommen sind.

**16.** Vorrichtung nach einem der Ansprüche 1 bis 15, **dadurch gekennzeichnet, dass** der Detektor (6) zur Messung der Fluoreszenzstrahlung gekühlt ist.

**17.** Vorrichtung nach Anspruch 16, **dadurch gekennzeichnet, dass** der Detektor (6) peltiergekühlt ist.

**18.** Vorrichtung nach einem der Ansprüche 1 bis 17, **dadurch gekennzeichnet, dass** die Röntgenstrahlungsquelle (1) ein Synchrotron, eine Drehanode oder eine Röntgenröhre ist.

**19.** Vorrichtung nach einem der Ansprüche 1 bis 18, **dadurch gekennzeichnet, dass** im Strahlengang der Röntgenstrahlung zwischen Röntgenstrahlungsquelle (1) und Probe mindestens eine translatorisch bewegbare Blende (9a) angeordnet ist.

**20.** Verfahren zur Durchführung von Röntgenfluoreszenzanalysen mit einer Vorrichtung nach einem der Ansprüche 1 bis 19, **dadurch gekennzeichnet, dass** die Röntgenstrahlen der Röntgenstrahlungsquelle (1) mit einem die röntgenoptischen Eigenschaften des Multischichtsystems (4a) berücksichtigerzden Einfallswinkels $\theta_m$ auf die Oberfläche des auf der Oberfläche des Probenträgers (4) angeordneten Multischichtsystems (4a) gerichtet werden, der die BRAGG-Reflexion der einfallenden Röntgenphotonen gewährleistet.

**21.** Verfahren nach Anspruch 20, **dadurch gekennzeichnet, dass** der Probenträger (4) mit Multischichtsystem (4a) und/oder die Reflektoreinheit (en) (2) unter Berücksichtigung der mit dem zweiten Detektor (8) gemessenen Intensität der an der Oberfläche des Multischichtsystems (4a) reflektierten Röntgenstrahlung translatorisch verschoben und/oder um eine Achse verschwenkt werden.

**22.** Verfahren nach Anspruch 20 oder 21, **dadurch gekennzeichnet, dass** eine divergente polychromatische Strahlung mittels eines parabolisch gekrümmten Multischichtsystems (2a), dessen Schichtdickengradienten auf seine Krümmung abgestimmt sind, in monochromatische parallele Strahlung umgewandelt wird.

**23.** Verfahren nach Anspruch 20 oder 21, **dadurch gekennzeichnet, dass** parallele polychromatische Strahlung mittels eines ebenen Multischichtsystems (2a) mit konstanter Periodendicke d in eine parallele monochromatische Strahlung umgewandelt wird.

**24.** Verfahren nach Anspruch 20 oder 21, **dadurch gekennzeichnet, dass** eine divergente Röntgenstrahlung mittels einem parabolisch, elliptisch oder in Form einer logarithmischen Spirale gekrümmten Gradientenschichtsystem (2a) auf die Oberfläche des auf dem Probenträger (4) angeordneten Multischichtsystems (4a) fokussiert wird, wobei die Periodendickenverteilung des Multischichtsystems (2a) auf der Reflektoreinheit (2) gewährleistet, dass die auf das Multischichtsystem (4a) gerichteten Röntgenphotonen die BRAGG-Bedingungen erfüllen.

**25.** Verfahren nach einem der Ansprüche 20 bis 24, **dadurch gekennzeichnet, dass** eine flüssige Probe auf dem Probenträger (4) verdampft und analysiert wird.

**26.** Verfahren nach einem der Ansprüche 20 bis 24, **dadurch gekennzeichnet, dass** eine gasförmige Probe über die Oberfläche des Multischichtsystems (4a) geführt wird.

**27.** Verfahren nach einem der Ansprüche 20 bis 26, **dadurch gekennzeichnet, dass** ein Wellenlängen-Teilintervall einer polychromatischen auf das Multischichtsystem (4a) fokussierten Röntgenstrahlung mit der Blende (9a) ausgeblendet wird.

**28.** Verwendung einer Vorrichtung nach einem der Ansprüche 1 bis 19 in der Umwelttechnik.

**29.** Verwendung einer Vorrichtung nach einem der Ansprüche 1 bis 19 für partikelförmige Proben.

**30.** Verwendung einer Vorrichtung nach einem der Ansprüche 1 bis 19 für eine flüssige Probe, die von einem Si-Wafer mittels VPD genommen worden ist.

**Claims**

1.  Device for X-ray fluorescence analysis, in which an X-radiation source directs X-radiation at a sample located on a sample carrier, and a detector (6) is present for determination of the fluorescent radiation, **characterised in that** the sample is arranged on a multi-layer system (4a), or a fluidic sample flows over the multi-layer system (4a),
    the multi-layer system being formed of a plurality of individual layers which are arranged in a periodically repeating manner, and adjacent individual layers are composed of materials with a different X-ray optical refractive index; and the period thicknesses d in the multi-layer system (4a) and the angle of incidence θ of the X-radiation satisfy BRAGG's law for the X-radiation wavelength λ which is used.

2.  Device for X-ray fluorescence analysis, in which an X-radiation source directs X-radiation at a sample located on a sample carrier, and a detector (6) is present for determination of the fluorescent radiation, **characterised in that** the sample is arranged on a multi-layer system (4a), or a fluidic sample flows over the multi-layer system (4a),
    the multi-layer system being formed as an aperiodically constructed multi-layer system, in which one or more individual-layer thicknesses are changed, and adjacent individual layers are composed of materials with a different X-ray optical refractive index; and the period thicknesses d in the multi-layer system (4a) and the angle of incidence θ of the X-radiation satisfy BRAGG's law for the X-radiation wavelength λ which is used.

3.  Device according to Claim 1 or 2, **characterised in that** the multi-layer system (4a) is formed on the sample carrier or on a substrate.

4.  Device according to one of the preceding claims, **characterised in that** the individual layers and the substrate are composed of elements having an atomic number Z > 10, or of compounds of these elements.

5.  Device according to one of Claims 1 to 4, **characterised in that** at least one reflector unit (2) is arranged between the X-radiation source (1) and the multi-layer system (4a) in the ray path of the X-radiation.

6.  Device according to one of Claims 1 to 5, **characterised in that** a multi-layer system (2a) consisting of a plurality of individual layers arranged in a periodically repeating manner is arranged on the reflector unit(s) (2), and adjacently arranged individual layers each have different X-ray optical refractive indices.

7.  Device according to one of Claims 1 to 6, **characterised in that** the period thickness d of the individual layer pairs of a multi-layer system (2a, 4a) is in the range of 1 nm to 20 nm.

8.  Device according to one of Claims 1 to 7, **characterised in that** the individual layers are composed of $B_4C$, BN, $CN_x$, B, Be, Li or of various modifications of the carbon or organic compounds with C, H, N and O.

9.  Device according to one of Claims 3 to 8, **characterised in that** the substrate is composed of glassy carbon.

10. Device according to one of Claims 1 to 9, **characterised in that** an energy-dispersive detector (6) is present for determination of the fluorescent radiation.

11. Device according to one of Claims 1 to 10, **characterised in that** a polycapillary optic (7) is arranged between the detector (6) and the multi-layer system (4a) with sample for spatially resolved measurement of the fluorescent radiation.

12. Device according to one of Claims 1 to 11, **characterised in that** the sample carrier (4) can be temperature-controlled.

13. Device according to one of Claims 1 to 12, **characterised in that** a second detector (8) is present for measuring the intensity of the X-radiation reflected on the surface of the multi-layer system (4a).

14. Device according to one of Claims 1 to 13, **characterised in that** the sample carrier (4) with multi-layer system (4a) and/or the reflector unit(s) (2) is/are translationally movable and/or pivotable with at least one degree of freedom.

15. Device according to one of Claims 1 to 14, **characterised in that** the elements (2, 4, 6, 7, 8) are accommodated in a sealed housing which can be evacuated or filled with an inert gas.

16. Device according to one of Claims 1 to 15, **characterised in that** the detector (6) for measuring the fluorescent radiation is cooled.

17. Device according to Claim 16, **characterised in that** the detector (6) is Peltier cooled.

18. Device according to one of Claims 1 to 17, **characterised in that** the X-radiation source (1) is a synchrotron, a rotating anode or an X-ray tube.

19. Device according to one of Claims 1 to 18, **charac-**

**terised in that** at least one translationally movable shutter (9a) is arranged in the ray path of the X-radiation between the X-radiation source (1) and the sample.

20. Method for performing X-ray fluorescence analyses with a device according to one of Claims 1 to 19, **characterised in that** the X-rays of the X-radiation source (1) are directed at the surface of the multi-layer system (4a) arranged on the surface of the sample carrier (4) with an angle of incidence $\theta_m$ which takes account of the X-ray optical characteristics of the multi-layer system (4a) and ensures the BRAGG reflection of the incident X-ray photons.

21. Method according to Claim 20, **characterised in that** the sample carrier (4) with multi-layer system (4a), and/or the reflector unit(s) (2) are translationally displaced and/or pivoted about an axis, taking account of the intensity of the X-radiation reflected on the surface of the multi-layer system (4a) which is measured by the second detector (8).

22. Method according to Claim 20 or 21, **characterised in that** a divergent polychromatic radiation is converted into monochromatic parallel radiation by means of a parabolically curved multi-layer system (2a), the layer thickness gradients of which are matched to its curvature.

23. Method according to Claim 20 or 21, **characterised in that** parallel polychromatic radiation is converted into a parallel monochromatic radiation by means of a plane multi-layer system (2a) having a constant period thickness d.

24. Method according to Claim 20 or 21, **characterised in that** a divergent X-radiation is focused, by means of a gradient layer system (2a) curved parabolically, elliptically or in the shape of a logarithmic spiral, on the surface of the multi-layer system (4a) arranged on the sample carrier (4), the distribution of period thicknesses of the multi-layer system (2a) on the reflector unit (2) ensuring that the X-ray photons directed at the multi-layer system (4a) satisfy the BRAGG conditions.

25. Method according to one of Claims 20 to 24, **characterised in that** a liquid sample is evaporated on the sample carrier (4) and analysed.

26. Method according to one of Claims 20 to 24, **characterised in that** a gaseous sample is passed over the surface of the multi-layer system (4a).

27. Method according to one of Claims 20 to 26, **characterised in that** a wavelength subinterval of a polychromatic X-radiation focused on the multi-layer system (4a) is stopped out by the shutter (9a).

28. Use of a device according to one of Claims 1 to 19 in environmental technology.

29. Use of a device according to one of Claims 1 to 19 for particle-shaped samples.

30. Use of a device according to one of Claims 1 to 19 for a liquid sample which has been taken from an Si wafer by means of VPD.

**Revendications**

1. Dispositif d'analyse par fluorescence aux rayons X, dans lequel une source de rayons X dirige des rayons X sur un échantillon se trouvant sur un porte-échantillon et un détecteur (6) est présent pour déterminer le rayonnement fluorescent, **caractérisé en ce que** l'échantillon est disposé sur un système à couches multiples (4a) ou **en ce qu'**un échantillon fluide s'écoule sur le système à couches multiples (4a),
dans lequel le système à couches multiples est formé de plusieurs couches individuelles agencées selon une périodicité récurrente et les couches individuelles adjacentes sont constituées de matériaux ayant un indice de réfraction différent en optique de rayons X ; et les épaisseurs périodiques d du système à couches multiples (4a) et l'angle d'incidence $\theta$ des rayons X, pour la longueur d'onde des rayons X $\lambda$ utilisée, satisfont à l'équation de BRAGG.

2. Dispositif d'analyse par fluorescence aux rayons X, dans lequel une source de rayons X dirige un rayonnement X sur un échantillon se trouvant sur un porte-échantillon et un détecteur (6) est présent pour déterminer le rayonnement fluorescent, **caractérisé en ce que** l'échantillon est disposé sur un système à couches multiples (4a) ou **en ce qu'**un échantillon fluide s'écoule sur le système à couches multiples (4a),
dans lequel le système à couches multiples se présente sous la forme d'un système à couches multiples organisé de manière apériodique, dans lequel une ou plusieurs épaisseurs de couches individuelles est ou sont modifiées, et des couches individuelles adjacentes sont constituées de matériaux ayant un indice de réfraction différent en optique de rayons X ; et les épaisseurs périodiques d du système à couches multiples (4a) et l'angle d'incidence $\theta$ des rayons X, pour la longueur d'onde des rayons X $\lambda$ utilisée, satisfont à l'équation de BRAGG.

3. Dispositif selon la revendication 1 ou 2, **caractérisé en ce que** le système à couches multiples (4a) est formé sur le porte-échantillon ou un substrat.

**4.** Dispositif selon l'une quelconque des revendications précédentes, **caractérisé en ce que** les couches individuelles et le substrat sont constitués d'éléments ayant un numéro atomique Z > 10 ou de composés de ces éléments.

**5.** Dispositif selon l'une quelconque des revendications 1 à 4, **caractérisé en ce qu'**au moins une unité de réflecteur (2) est disposée entre la source de rayons X (1) et le système à couches multiples (4a) dans le trajet des rayons X.

**6.** Dispositif selon l'une quelconque des revendications 1 à 5, **caractérisé en ce que**, sur la ou les unités de réflecteur (2), un système à couches multiples (2a), constitué de plusieurs couches individuelles disposées selon une périodicité récurrente, et les couches individuelles disposées de manière respectivement adjacente présentent des indices de réfraction différents en optique de rayons X.

**7.** Dispositif selon l'une quelconque des revendications 1 à 6, **caractérisé en ce que** l'épaisseur périodique d de la paire de couches individuelles d'un système à couches multiples (2a, 4a) se situe dans la plage entre 1 nm et 20 nm.

**8.** Dispositif selon l'une quelconque des revendications 1 à 7, **caractérisé en ce que** les couches individuelles sont constituées de $B_4C$, de BN, de CNx, de B, de Be, de Li ou de diverses modifications du carbone ou de composés organiques avec les éléments C, H, N et O.

**9.** Dispositif selon l'une quelconque des revendications 3 à 8, **caractérisé en ce que** le substrat est constitué de carbone vitreux.

**10.** Dispositif selon l'une quelconque des revendications 1 à 9, **caractérisé en ce qu'**un détecteur (6) dispersif en énergie est présent pour déterminer le rayonnement fluorescent.

**11.** Dispositif selon l'une quelconque des revendications 1 à 10, **caractérisé en ce qu'**un système optique polycapillaire (7) est disposé entre le détecteur (6) et le système à couches multiples (4a) avec un échantillon pour une mesure du rayonnement fluorescent par résolution spatiale.

**12.** Dispositif selon l'une quelconque des revendications 1 à 11, **caractérisé en ce que** le porte-échantillon (4) peut avoir une température réglable.

**13.** Dispositif selon l'une quelconque des revendications 1 à 12, **caractérisé en ce qu'**un second détecteur (8) est présent pour mesurer l'intensité des rayons X réfléchi à la surface du système à couches multiples (4a).

**14.** Dispositif selon l'une quelconque des revendications 1 à 13, **caractérisé en ce que** le porte-échantillon (4) avec un système à couches multiples (4a) et/ou la ou les unités de réflecteur (2) peut (peuvent) être soumis à un déplacement en translation et/ou à un pivotement avec un au moins un degré de liberté.

**15.** Dispositif selon l'une quelconque des revendications 1 à 14, **caractérisé en ce que** les éléments (2, 4, 6, 7, 8) sont logés dans un boîtier fermé, qui peut être soumis à un vide ou peut être chargé d'un gaz inerte.

**16.** Dispositif selon l'une quelconque des revendications 1 à 15, **caractérisé en ce que** le détecteur (6) est refroidi pour mesurer le rayonnement fluorescent.

**17.** Dispositif selon la revendication 16, **caractérisé en ce que** le détecteur (6) est refroidi par effet Peltier.

**18.** Dispositif selon l'une quelconque des revendications 1 à 17, **caractérisé en ce que** la source de rayons X(1) est un synchrotron, une anode tournante ou un tube à rayons X.

**19.** Dispositif selon l'une quelconque des revendications 1 à 18, **caractérisé en ce qu'**au moins un écran (9a) déplaçable en translation est disposé dans le trajet des rayons X entre la source de rayons X(1) et l'échantillon.

**20.** Procédé pour réaliser des analyses par fluorescence aux rayons X avec un dispositif selon l'une quelconque des revendications 1 à 19, **caractérisé en ce que** les rayons X de la source de rayons X(1) sont dirigés avec un angle d'incidence $\theta_m$ tenant compte des propriétés du système à couches multiples (4a) en optique de rayons X à la surface du système à couches multiples (4a) disposé à la surface du porte-échantillon (4), ce qui garantit la réflexion de BRAGG des photons X incidents.

**21.** Procédé selon la revendication 20, **caractérisé en ce que** le porte-échantillon (4) avec le systèmes à couches multiples (4a) et/ou la ou les unités de réflecteur (2) est soumis à un déplacement en translation et/ou à un pivotement autour d'un axe en tenant compte de l'intensité, mesurée avec le second détecteur (8), du rayonnement X réfléchi à la surface du système à couches multiples (4a).

**22.** Procédé selon la revendication 20 ou 21, **caractérisé en ce qu'**un rayonnement polychromatique divergent est transformé en rayonnement monochromatique parallèle au moyen d'un système à couches multiples (2a) cintré en forme de parabole, dont les gradients d'épaisseurs de couches sont en concordance avec sa courbure.

23. Procédé selon la revendication 20 ou 21, **caractérisé en ce qu'**un rayonnement polychromatique parallèle est transformé en rayonnement monochromatique parallèle au moyen d'un système à couches multiples (2a) plan ayant une épaisseur périodique d constante.

24. Procédé selon la revendication 20 ou 21, **caractérisé en ce qu'**un rayonnement X divergent est focalisé sur la surface du système à couches multiples (4a) disposé sur le porte-échantillon (4) au moyen d'un système de couches de gradients cintré en forme de parabole, d'ellipse ou de spirale logarithmique, dans lequel la distribution d'épaisseurs périodiques du système à couches multiples (2a) est garantie sur l'unité de réflecteur (2), de sorte que les photons X dirigés sur le système à couches multiples (4a) satisfassent aux conditions de BRAGG.

25. Procédé selon l'une quelconque des revendications 20 à 24, **caractérisé en ce qu'**un échantillon liquide est vaporisé et analysé sur le porte-échantillon (4).

26. Procédé selon l'une quelconque des revendications 20 à 24, **caractérisé en ce qu'**un échantillon gazeux est conduit sur la surface du système à couches multiples (4a).

27. Procédé selon l'une quelconque des revendications 20 à 26, **caractérisé en ce qu'**un intervalle partiel de longueurs d'onde de rayons X polychromatiques focalisés sur le système à couches multiples (4a) est masqué par l'écran (9a).

28. Utilisation d'un dispositif selon l'une quelconque des revendications 1 à 19 en technique environnementale.

29. Utilisation d'un dispositif selon l'une quelconque des revendications 1 à 19 pour des échantillons particulaires.

30. Utilisation d'un dispositif selon l'une quelconque des revendications 1 à 19 pour un échantillon liquide qui a été reçu par une tranche de Si (wafer) par VPD.

Figur 1

EP 1 192 451 B1

# Simulationsrechnungen für $\lambda=0.0708$nm (Mo K$\alpha$)

Figur 2

EP 1 192 451 B1

Figur 3

Figur 5

Figur 4

EP 1 192 451 B1

Figur 6

Figur 7

(4a) mit d

F

(4)

$\lambda_1$

$\lambda_j$

$\lambda_2$

2

2a

$\partial A_i$

$\Theta_{j,\,m=1}$

In F gilt $\forall \lambda;\ \lambda_j \in (\lambda, \lambda_1, \lambda_2)$:

$$\lambda_j = 2d*(\sin^2\Theta_{j,\,m=1} - 2\delta_{\lambda j})^{1/2}$$

Figur 8

$\partial A_j$

$d_{\partial Aj}$

$2\Theta_{Aj,\,m=1}$

$\lambda_j$

mit: $d_{\partial Aj} = \dfrac{0.5*\lambda_j}{(\sin^2\Theta_{Aj,\,m=1} - 2\delta_{\lambda j})^{1/2}}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0456897 A1